# EUROPÄISCHE PATENTSCHRIFT

(11) **EP 0 779 840 B1**
(45) Veröffentlichungstag und Bekanntmachung des Hinweises auf die Patenterteilung: **21.10.1998**
(21) Anmeldenummer: 95929744.1
(22) Anmeldetag: 01.09.1995
(51) Int. Cl.: B03D 1/24, C02F 1/24

(54) **BEGASUNGS-/FLOTATIONS-REAKTOR MIT ANORDNUNGEN ZUR ABTRENNUNG VON FESTSTOFFEN AUS FLÜSSIGKEITEN**
GAS ENTRAINMENT/FLOTATION REACTOR WITH ARRANGEMENTS FOR SEPARATING SOLIDS FROM LIQUIDS
REACTEUR D'ENTRAINEMENT GAZEUX/FLOTTATION AVEC DES DISPOSITIFS DE SEPARATION DE SOLIDES CONTENUS DANS DES LIQUIDES

(30) Priorität: 09.09.1994 DE 4432042
(43) Veröffentlichungstag der Anmeldung: 25.06.1997
(73) Patentinhaber: FORSCHUNGSZENTRUM JÜLICH GMBH, 52425 Jülich (DE)
(72) Erfinder: OVERATH, Horst, D-52428 Jülich (DE)
(86) Internationale Anmeldenummer: DE9501192
(87) Internationale Veröffentlichungsnummer: WO9607483

(56) Entgegenhaltungen:
- EP-A- 0 274 083
- DE-A- 3 412 217
- FR-A- 2 315 988

## Beschreibung

Die Erfindung bezieht sich auf einen Begasungs-/Flotations-Reaktor, insbesondere zur Aufbereitung von organische Materialien enthaltenden Flüssigkeiten, mit mindestens einem Zuleitungsrohr, das in einen Einleitungsraum mündet, an den sich ein Steigrohr anschließt, über welches ein Schaumrohr übergreift, an dessen oberes Ende sich eine Schaumauffangvorrichtung anschließt und dessen unteres Ende in den unteren Bereich eines Mantelrohres einmündet, dessen oberes Ende mindestens einen Flüssigkeitsauslaß aufweist.

Ein Begasungs-/Flotations-Reaktor der oben genannten Art ist aus der Europäischen Patentschrift 0 274 083 bekannt: Zur Aufbereitung von insbesondere organische Materialien enthaltendem Wasser wird dieses durch das Zuleitungsrohr in den Einleitungsraum gepumpt und dabei mit Luft oder einem Luft-Ozon-Gemisch versorgt, das sich mit der Flüssigkeit feinstblasig vermischt. Die im Wasser enthaltenen organischen Materialien, wie beispielsweise Biomasse, Proteine, Ammoniak u.ä. lagern sich an die Bläschen an, steigen mit diesen im Steigrohr aufwärts und gelangen in das Schaumrohr, in dem sich die mit den organischen Materialien belagerten Bläschen zu einer Schaumsäule aufbauen. Diese Schaumsäule wird durch aufsteigende Gasblasen in eine Auffangvorrichtung, die sich am oberen Ende des Schaumrohres anschließt, gedrückt. Die nicht oder nur mit wenig organischem Material beladenen Bläschen strömen dagegen im Schaumrohr in dem das Steigrohr umgebenden Bereich abwärts bis zum unteren, als "Sogentspannungskonus" bezeichneten Ende. Dort verlangsamt sich die Strömung soweit, daß die Gasbläschen wieder aufwärts steigen. Damit findet im Bereich zwischen Schaumrohr und Steigrohr eine Auf- und Abwärtsbewegung von Gasbläschen statt. Während dieser Auf- und Abwärtsströmung lagert sich noch im Wasser enthaltenes organisches Material an die Bläschen an, die sich ihrerseits zu Schaum zusammenlagern, der sich am oberen Ende des Steigrohres mit der Hauptschaumsäule verbindet. Das blasenfreie und von organischen Stoffen gereinigte Wasser steigt durch das Mantelrohr aufwärts und verläßt durch dessen Flüssigkeitsauslaß den Reaktor.

Ein Nachteil des so konzipierten Reaktors ist allerdings, daß ein großer Anteil von in der Flüssigkeit bzw. im Wasser befindlichen Feststoffen, insbesondere von solchen mit dem gleichen oder einem höheren spezifischen Gewicht als die Flüssigkeit, nicht entfernt werden können, also in der von organischen Stoffen befreiten Flüssigkeit verbleiben und einem zu reinigenden System, wie beispielsweise einem Aquarium, wieder zugeleitet werden.

Es ist daher Aufgabe der Erfindung, Anordnungen zu schaffen, mit denen auch die Feststoffe aus den zu reinigenden Flüssigkeiten entfernt werden. Diese Anordnungen sollen im weiteren Ausbau möglichst raumsparend und leicht zu reinigen sein.

Diese Aufgabe wird erfindungsgemäß dadurch gelöst, daß der Einleitungsraum aus einem zylinderförmigen Unterteil und einem dem Unterteil aufgesetzten, als Kegelstumpf ausgebildeten Aufsatz besteht. Zudem mündet das Zuleitungsrohr tangential in das Unterteil ein, was zur Folge hat, daß das in den Einleitungsraum einströmende Flüssigkeitsgasgemisch in Rotation versetzt wird. Dabei werden die Feststoffe mit dem gleichen oder einem höheren spezifischen Gewicht als die Flüssigkeit nach außen an die Wand gedrängt, während sich Feststoffe mit einem geringeren spezifischen Gewicht im mittleren Bereich der rotierenden Flüssigkeitssäule sammeln. Dort baut sich also bereits durch die Anlagerung flotierbarer Feststoffe an die Luft- oder Luftozonbläschen eine Schaumsäule auf. Der Winkel zwischen Kegelgrundfläche und Kegelmantel ist so gewählt, daß die in der Flüssigkeit enthaltenen und durch Rotation der Flüssigkeit an die Wand des Einleitungsraumes gedrängten Feststoffe nunmehr entlang der Kegelwandung in der aufsteigenden Strömung zu einem Bereich geführt werden, der die Spitze eines an die Stelle des Kegelstumpfes gedachten Kegels umfaßt. In diesem Bereich lagern sich die Feststoffe dann an die oben erwähnte, sich bildende Schaumsäule an und werden somit aus der Flüssigkeit entfernt. Um einen möglichst hohen Anteil an Feststoffen aus der zu reinigenden Flüssigkeit zu entfernen, liegt der Winkel zwischen Kegelgrundfläche und Kegelmantel vorzugsweise in einem Bereich zwischen 30° bis 60°. Zudem mündet das Zuleitungsrohr vorzugsweise in der mittleren Höhe des zylinderförmigen Unterteils in den Einleitungsraum ein, damit eine möglichst gleichmäßige Gasblasenverteilung in der Flüssigkeit über den gesamten Innenraum gewährleistet ist. Diese Art der Flüssigkeitseinleitung hat auch den weiteren Vorteil, daß eine längere Verweilzeit der Luftbläschen in der Flüssigkeit gegeben ist, so daß diese besser mit Sauerstoff versorgt wird. Auch erfolgt bei Begasung der Flüssigkeit mit einem Luftozongemisch eine bessere Anlagerung insbesondere der Proteine an die Gasblasen. Dabei wurde festgestellt, daß der Ozonbedarf für die zur Anlagerung an die Gasblasen notwendige positive Aufladung neutraler Proteine etwa um ein Drittel unter dem Bedarf bei den aus dem Stand der Technik bekannten Gegenstromsäulen liegt.

Der Reaktor ist weiterhin oberhalb der Spitze des gedachten Kegels im Steigrohr mit einer Einrichtung versehen, die dafür sorgt, daß die rotierende Strömung der Flüssigkeit in eine im Steigrohr linear aufsteigende Strömung umgewandelt wird. Dafür können beispielsweise Stege, Verstrebungen, eine Zwischenwand o.ä. verwendet werden. Erfolgt die genannte Strömungsumwandlung nicht, hat dies Verwirbelungen bis hoch ins Schaumrohr zur Folge, die dazu führen, daß der Schaum zerschlagen und durch die Strömung wieder in den unteren Bereich des Reaktors gerissen wird.

Eine erfindungsgemäße Alternative zur Lösung der genannten Aufgabe besteht darin, daß ein weiteres Rohr das Mantelrohr derart umhüllt, daß ein als Filterkammer ausgestalteter Zwischenraum ausgebildet wird, der mit Filtermaterial gefüllt und mit einem Flüssigkeitseinlaß und einem Flüssigkeitsauslaß ausgestattet ist. Als Filtermaterial eignen sich bei Einsatz der erfindungsgemäßen Vorrichtung im kleintechnischen Bereich - wie beispielsweise im aquaristischen Bereich - insbesondere Schaumstoffe, Filterwatte oder Tropfkörper, also vorzugsweise Materialien, die leicht auswechselbar sind, so daß die Filterkammer leicht zu reinigen ist. Für den großtechnischen Einsatz - wie beispielsweise für ungeklärte Industrieabwässer oder in Kläranlagen, Delphinarien u.ä. - eignen sich je nach Art der zu entfernenden Feststoffe insbesondere Materialien wie Kies, Sand oder Kohle. Die Filterkammer kann auch abwechselnd mit diesen Materialien gefüllt sein, so daß ein Mehrschichtfiltersystem ausgebildet wird.

Der Flüssigkeitseinlaß in die Filterkammer bildet vorzugsweise gleichzeitig den Flüssigkeitsauslaß des Mantelrohres. Weiterhin ist im oberen Bereich der Filterkammer oberhalb des Filtermaterials mindestens ein Flüssigkeitsüberlauf ausgebildet, so daß für den Fall, daß das Filtermaterial durch die zurückgehaltenen Feststoffe verdichtet ist und der Flüssigkeitsstand in der Filterkammer ansteigt die Flüssigkeit aus der Filterkammer über den Überlauf abgeleitet wird. Zur Messung des Flüssigkeitsstandes in der Filterkammer ist oberhalb des Filtermaterials ein Sensor angebracht, der einen Anstieg des Flüssigkeitspegels in der Filterkammer registriert. Der Sensor muß Selbstverständlich derart angebracht sein, daß ein Ansteigen des Flüssigkeitsstandes durch den Sensor angezeigt wird, bevor die Flüssigkeit aus der Filterkammer über den Überlauf abgeleitet wird. Zusätzlich ist zur Reinigung der Filterkammer der untere Bereich der Kammer mit einer Einrichtung zur Einleitung von Luft und/oder Wasser ausgestattet. Eine solche Einrichtung kann beispielsweise aus einer Düse bestehen, die an einen Spülwasserbehälter und Luftkompressor angeschlossen ist.

Die erfindungsgemäße Filterkammer wird vorzugsweise durch ein oder mehrere Wände in 2 oder mehrere Filterkammern unterteilt. Dabei ist wenigstens ein Teil dieser Filterkammern mit Überlauf, Sensor und Einrichtung zum Einleiten von Luft und/oder Wasser ausgestattet. Weiterhin ist im oberen Bereich der Filterkammer(n) ein Rückführungsrohr angeschlossen, wobei die Filterkammer(n) maximal bis direkt unterhalb der Anschlußöffnung des Rückführungsrohres mit Filtermaterial gefüllt ist. Bei Flüssigkeiten mit einem hohen Anteil an flotierbaren Materialien werden diese über das Rückführungsrohr wieder dem Begasungs-/Flotations-Reaktor zugeleitet, wobei der Zulauf zur Filterkammer unterbunden wird, indem z.B. ein Ventil im Flüssigkeitsauslaß der Filterkammer geschlossen wird.

Das Rückführungsrohr kann Selbstverständlich auch vom oberen Bereich des Mantelrohres ausgehen, wobei zudem der Flüssigkeitsauslaß des Mantelrohres als Rückführungsrohr ausgebildet sein kann. In diesen Fällen kann der Zulauf zur Filterkammer durch ein Ventil im Flüssigkeitseinlaß der Kammer geschlossen und ein Ventil im Rückführungsrohr bzw. im entsprechend ausgebildeten Flüssigkeitsauslaß des Mantelrohres geöffnet werden.

Eine optimale Entfernung von Feststoffen aus Flüssigkeiten mit hohem Feststoffanteil erfolgt in Begasungs-/Flotations-Reaktoren, die sowohl mit einem erfindungsgemäßen Einleitungsraum als auch mit einer oder mehreren erfindungsgemäßen Filterkammer(n) mit oder ohne eine der genannten vorteilhaften Ausgestaltungen ausgestattet ist.

Insbesondere für Filterkammern mit Filtermaterialien, die sich vor allem für den großtechnischen Einsatz eignen (wie z.B. Kies, Sand und/oder Kohle, vgl. oben), ist eine Regeleinrichtung für eine einfache Reinigung des Filtermaterials vorgesehen. Voraussetzung ist, daß die Filterkammer mit Überlauf, Sensor und Ein-richtung zum Einleiten von Luft und/oder Wasser ausgestattet ist. Verdichtet sich das Filtermaterial durch zurückgehaltene Feststoffe, steigt der Flüssigkeitsspiegel oberhalb des Filtermaterials an. Der dort angebrachte Sensor gibt ein Flüssigkeitsstands-Signal an eine elektronische Einrichtung, die den Flüssigkeitsein- und - auslaß der Filterkammer sowie das Zuleitungsrohr - beispielsweise über Ventile - schließt und gleichzeitig die Einrichtung zum Einleiten von Luft und/oder Wasser über eine bestimmte Zeit öffnet. Die Luft und/oder das Wasser wird beispielsweise über eine Düse in das Filterbett eingeleitet, so daß das Filtermaterial kräftig durchwirbelt wird. Dabei lösen sich die Feststoffe aus dem Filtermaterial heraus und reichern sich in der Flüssigkeit in der Filterkammer an. Die so mit den Feststoffen angereicherte Flüssigkeit steigt.in der Filterkammer auf und wird über den Überlauf in einen Abwasserkanal geleitet. Sobald die Kammer derart von den Feststoffen gereinigt ist, werden die geöffneten Vorrichtungsteile, nämlich die Einrichtung zum Einleiten von Luft und/oder Wasser, wieder geschlossen und die geschlossenen Vorrichtungsteile, also Flüssigkeitsein- und -auslaß der Kammer sowie Zuleitungsrohr, wieder geöffnet. Die Reinigungsdauer wird entweder fest vorgegeben oder über eine Trübungsmeß-Sonde, die die Trübung der Flüssigkeit z.B. am Überlauf mißt, bestimmt. Für die Regeleinrichtung kann statt einer elektronischen auch eine elektrische, beispielsweise über Relais betätigte Einrichtung verwendet werden.

Bei der vorgenannten Regeleinrichtung ist über die Dauer der Reinigung der Filterkammer der Begasungs-/Flotations-Reaktor außer Betrieb. In solchen Fällen dagegen, in denen die Flüssigkeit kurzzeitig auch ohne Filtration einem zu reinigenden System zugeleitet werden kann, schließt die elektronische oder elektrische Einrichtung bei Signalgabe des Sensors den Flüssigkeitsein- und -auslaß der Filterkammer und öffnet über eine vorgegebene Zeit nicht nur die Einrichtung zum Einleiten von Luft und/oder Wasser, sondern auch den Auslaß des Mantelrohres, über den die Flüssigkeit dem zu reinigenden System unfiltriert zugeleitet wird. Sobald die Filterkammer gereinigt ist, werden die geöffneten Vorrichtungsteile wieder geschlossen und die geschlossenen wieder geöffnet und somit die Flüssigkeit wieder filtriert.

Desweiteren ist eine Regeleinrichtung vorgesehen, bei der eine elektronische oder elektrische Einrichtung bei Signalgabe des Sensors den Flüssigkeitsein und -auslaß der Filterkammer sowie das Zuleitungsrohr schließt, die Einrichtung zum Einleiten von Luft und/oder Wasser sowie ein im oberen Bereich des Mantelrohres angeschlossenes Rückführungsrohr über eine bestimmte Zeit öffnet. Damit wird die unfiltrierte Flüssigkeit wieder in den Reaktor eingeleitet und über die Dauer der Reinigung der Filterkammer im Kreislauf durch den Reaktor geführt. Sobald die Filterkammer gereinigt ist, werden die geöffneten Vorrichtungsteile wieder geschlossen und die geschlos-senen wieder geöffnet und somit die im Kreislauf geführte, unfiltrierte Flüssigkeit nunmehr der Filterkammer wieder zur Filtration zugeleitet.

Zu der vorgenannten Regeleinrichtung sind auch weitere Variationen denkbar: Beispielsweise können durch die elektronische oder elektrische Einrichtung für die Dauer der Reinigung der Filterkammer das im oberen Bereich des Mantelrohres angeschlossene Rückführungsrohr, das Zuleitungsrohr und der Auslaß des Mantelrohres soweit geöffnet werden, daß ein Teil der Flüssigkeit über den Auslaß des Mantelrohres dem zu reinigenden System unfiltriert zugeleitet wird und ein Teil über das Rückführungsrohr wieder dem Reaktor zugeleitet wird. Dabei wird dieser Teil der Flüssigkeit mit weiterer aufzureinigender, über das Zuleitungsrohr zugeführter Flüssigkeit vermischt.

Um eine Filtration auch während der Reinigungsphase der Filterkammer zu gewährleisten, werden Reaktoren verwendet, deren Filterkammer durch ein oder mehrere Zwischenwände in 2 oder mehrere Filterkammern unterteilt ist, wobei wenigstens ein Teil der Filterkammern mit Überlauf, Sensor und Einrichtung zum Einleiten von Luft und/oder Wasser ausgestattet ist. Bei Signalgabe des Sensors einer Filterkammer schließt die elektronische oder elektrische Einrichtung deren Flüssigkeitsein- und -auslaß und öffnet deren Einrichtung zum Einleiten von Luft und/oder Wasser. Gleichzeitig wird eine dieser zu reinigenden Kammer zugeordnete Filterkammer über die bestimmte Zeit ebenfalls geöffnet, so daß die zu filtrierende Flüssigkeit über die Reinigungsdauer durch die zugeordnete Filterkammer geleitet und filtriert wird. Nach Reinigung der verdichteten Filterkammer wird die zugeordnete Kammer sowie die Einrichtung zum Einleiten von Luft und/oder Wasser wieder geschlossen und der Flüssigkeitsein- und -auslaß der gereinigten Kammer wieder geöffnet, so daß die Flüssigkeit wieder durch deren Filtersystem geleitet wird.

Eine Alternative zu der vorgenannten Regeleinrichtung besteht darin, daß die zugeordnete Kammer auf alle Fälle auch mit einem Überlauf, Sensor und einer Einrichtung zum Einleiten von Luft und/oder Wasser ausgestattet ist und beide Kammmern sich wechselseitig zugeordnet sind: jeweils eine der Kammern befindet sich zur Filtration der Flüssigkeit im Betriebszustand, während die andere Kammer zunächst geschlossen ist. Bei Signalgabe des Sensors, also bei Verdichtung der in Betrieb befindlichen Kammer, wird diese geschlossen und die zugeordnete Kammer geöffnet. Diese nunmehr geöffnete Kammer bleibt im Unterschied zur vorgenannten Regeleinrichtung auch nach der Reinigungsphase geöffnet, während die zu reinigende Kammer nach der Reinigung geschlossen bleibt. Diese wird erst wieder geöffnet und bleibt geöffnet, wenn die zugeordnete Kammer verdichtet ist und aufgereinigt wird. Damit findet ein Wechsel des Betriebszustandes der jeweils zugeordneten Kammern in alternierender Folge statt.

Nachfolgend wird die Erfindung anhand eines Ausführungsbeispiels unter Bezugnahme auf die angefügten Zeichnungen beschrieben. Es zeigen:

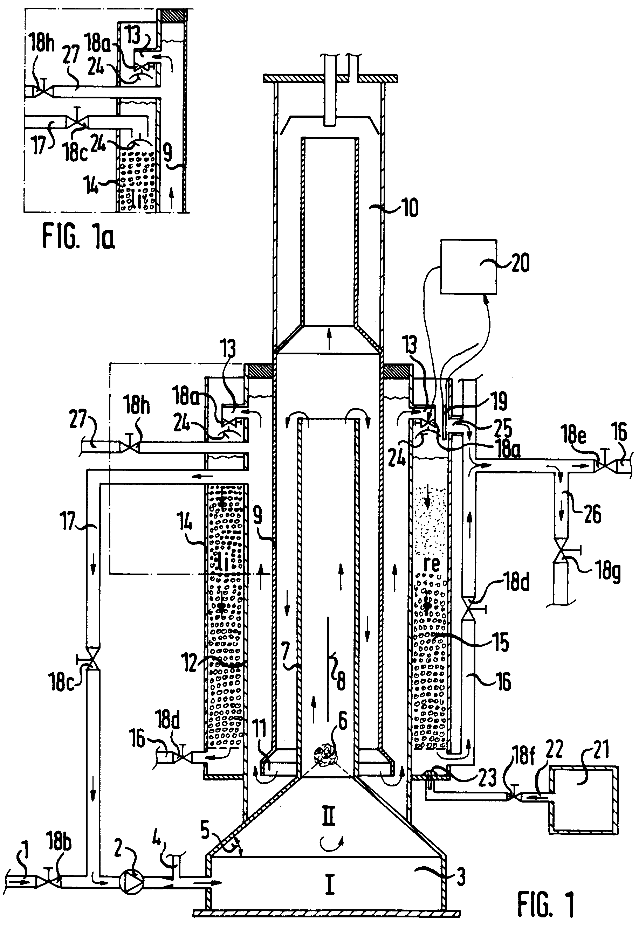

- Figur 1:: einen Begasungs-/Flotations-Reaktor mit Einleitungsraum und Filterkammer(n) im Längsschnitt;
- Figur 1a:: eine Teildarstellung des Reaktors gemäß Figur 1 mit alternativ angebrachtem Rückführungsrohr.

Figur 1 zeigt einen Begasungs/Flotations-Reaktor mit dem Zuleitungsrohr 1, durch das die zu reinigende Flüssigkeit mittels der Pumpe 2 in den Einleitungsraum 3 geleitet wird. Zuvor passiert die Flüssigkeit den Injektor 4, über den die Flüssigkeit mit Luft oder - bei Bedarf - mit einem Luft-Ozon-Gemisch versetzt wird, das mit der Flüssigkeit feinstblasig vermischt wird.

Der Einleitungsraum 3 besteht aus dem zylinderförmigen Unterteil I, in das das Zuleitungsrohr 1 in der mittleren Höhe tangential einmündet, und dem als Kegelstumpf ausgebildeten Aufsatz II, bei dem der Winkel 5 zwischen Kegelgrundfläche und Kegelmantel 45° beträgt. Durch die tangentiale Einleitung der Flüssigkeit in den Einleitungsraum 3 wird diese in Rotation versetzt, wobei die in der Flüssigkeit enthaltenen Feststoffe an die Wand des zylinderförmigen Unterteils I gedrängt werden. Die Feststoffe wandern entlang der Kegelwandung in den Bereich 6, der die Spitze eines an die Stelle des Kegelstumpfes gedachten Kegels umfaßt. In diesem Bereich bildet sich durch Anlagerung von ebenfalls in der Flüssigkeit enhaltenem organischen Material an die Gasbläschen eine stabile Schaumsäule, an die sich die Feststoffe anlagern. Die mit Feststoffen und organischem Material belagerte Schaumsäule steigt in das Steigrohr 7 hoch und passiert die im Querschnitt vom Steigrohr 7 angebrachte Zwischenwand 8, die dafür sorgt, daß die im Einleitungsraum 3 gebildete rotierende Strömung in eine im Steigrohr 7 linear aufsteigende Strömung übergeht. Die aufsteigende Flüssigkeit gelangt schließlich in das Schaumrohr 9, wobei sich die Schaumsäule durch weitere Anlagerungen von organischen Materialien an die Bläschen weiter ausbildet. Die Schaumsäule wird schließlich durch die aufsteigenden Gasblasen in die Schaumauffangvorrichtung 10 gedrückt.

Die nicht oder nur wenig beladenen Gasbläschen strömen im Schaumrohr 9 in dem das Steigrohr 7 umgebenden Bereich abwärts bis zum unteren Ende 11 ("Sogentspannungskonus"). Dort verlangsamt sich die Strömung soweit, daß die Gasbläschen wieder aufwärts steigen. Die blasenfreie Flüssigkeit steigt durch das Mantelrohr 12 aufwärts und gelangt über den Flüssigkeitseinlaß 13 in die zwischen Mantelrohr 12 und Rohr 14 gebildete Filterkammer 15. Dort werden die noch ggf. in der Flüssigkeit enthaltenen, nicht flotierbaren Feststoffe herausgefiltert. Die gereinigte Flüssigkeit wird über den Flüssigkeitsauslaß 16 schließlich wieder dem zu reinigenden System zugeleitet.

Für den Fall, daß die zu reinigende Flüssigkeit einen sehr hohen Anteil an flotierbaren Materialien enthält, die beim ersten Reinigungsdurchlauf durch den Reaktor nicht vollständig entfernt werden, wird die Flüssigkeit vor der Filtration über das vom Mantelrohr 12 ausgehende Rückführungsrohr 17 wieder dem Zuleitungsrohr 1 und damit dem Reaktor zugeleitet. Dafür werden das Ventil 18a im Flüssigkeitseinlaß 13 der Filterkammer 15 und das Ventil 18b im Zuleitungsrohr 1 geschlossen sowie das Ventil 18c im Rückführungsrohr 17 geöffnet. Die Flüssigkeit wird somit im Kreislauf durch den Reaktor geführt, bis die flotierbaren Stoffe aus der Flüssigkeit entfernt sind. Anschließend wird die Flüssigkeit in der Filterkammer 15 filtriert, indem die geschlossenen Ventile 18a und 18b wieder geöffnet sowie das Ventil 18c im Rückführungsrohr 17 wieder geschlossen wird.

In der Teildarstellung des Reaktors in Figur 1a ist das Rückführungsrohr 17 im Unterschied zur Darstellung in Figur 1 im oberen Bereich der Filterkammer 15 angeschlossen. Für den Fall, daß die zu reinigende Flüssigkeit im Kreislauf durch den Reaktor geführt werden soll, werden das Ventil 18b im Zuleitungsrohr 1 und das Ventil 18d im Flüssigkeitsauslaß 16 der Filterkammer 15 geschlossen, während das Ventil 18a im Flüssigkeitszulauf 13 der Filterkammer 15 geöffnet bleibt. Durch zusätzliche Öffnung des Ventils 18c im Rückführungsrohr 17 wird die in der Filterkammer 15 gestaute Flüssigkeit wieder dem Reaktor zugeleitet. Nach Entfernung der flotierbaren Stoffe aus der Flüssigkeit erfolgt die Filtration, indem die Ventile 18b und 18d wieder geöffnet und Ventil 18c wieder geschlossen wird.

Bei Verdichtung des Filtermaterials in der Filterkammer 15 durch zurückgehaltene Feststoffe steigt der Flüssigkeitspegel in der Filterkammer 15 an und erreicht zunächst das untere Ende des Sen-sors 19. Dieser gibt ein Signal an die elektronische Einrichtung 20, die daraufhin alternativ folgende Regelungen vornimmt:
1. Die elektronische Einrichtung 20 schließt bei Signalgabe des Sensors 19 über das Ventil 18a den Flüssigkeitseinlaß 13 in die Filterkammer 15, über die Ventile 18d und 18e den Flüssigkeitsauslaß 16 und über Ventil 18b das Zuleitungsrohr 1. Gleichzeitig werden die Ventile 18f und 18g geöffnet. Durch Öffnung des Ventils 18f wird vom Spülwasservorratsbehälter 21 über die Leitung 22 mittels der Düse 23 Wasser in die Filterkammer 15 gepumpt. Dies hat zur Folge, daß das Filtermaterial in der Filterkammer 15 kräftig aufgewirbelt wird und die Feststoffe aus dem Filtermaterial herausgelöst werden. Um zu vermeiden, daß die herausgelösten Schmutzpartikel das Ventil 18a im Flüssigkeitseinlaß 13 der Filterkammer 15 verstopfen bzw. das Rückführungsrohr 17 gemäß Figur 1a verschmutzen, sind die entsprechenden Öffnungen mit einem Prallblech 24 ausgestattet. Das mit den Feststoffen angereicherte Wasser wird über den Überlauf 25 durch die Abwasserleitung 26 abgeleitet. Nach Reinigung der Filterkammer 15 über eine bestimmte Zeit werden die Ventile 18a,b,d und e wieder geöffnet, während die Ventile 18f und g wieder geschlossen werden.
2. Im Unterschied zur vorgenannten Regelung bleibt bei einer Regelung gemäß Anspruch 14 das Ventil 18b des Zuleitungsrohres 1 geöffnet, und es wird zusätzlich das Ventil 18h vom Auslaß 27 des Mantelrohres 12 geöffnet. Dies hat zur Folge, daß die Flüssigkeit aus dem Reaktor während der Reinigungsphase über den Auslaß 27 dem zu reinigenden System unfiltriert zugeführt wird.
3. Alternativ zu der unter 2. beschriebenen Regelung wird bei einer Regelung gemäß Anspruch 15 an Stelle des Ventils 18h vom Auslaß 27 das Ventil 18c vom Rückführungsrohr 17 geöffnet und das Ventil 18b des Zuleitungsrohres 1 geschlossen. Während der Reinigung der Filterkammer 15 wird somit die Flüssigkeit im Kreislauf durch den Reaktor geführt, bis nach der Reinigungsphase die Filterkammer 15 wieder zur Filtration geöffnet wird.
   Die folgende Regelungsmöglichkeit (gemäß Anspruch 16) setzt voraus, daß rechte (re) und linke (li) Filterkammer durch eine Wand voneinander getrennt sind und zur Filtration der Flüssigkeit nur die rechte Kammer in Betrieb ist:
4. Bei Verdichtung des Filtermaterials der rechten Kammer 15 durch Feststoffe werden Ventil 18a vom Flüssigkeitseinlaß 13 und Ventile 18d und 18e vom Flüssigkeitsauslaß 16 geschlossen und Ventil 18g der Abwasserleitung 26 sowie Ventil 18f für den Reinigungsvorgang geöffnet. Gleichzeitig öffnen sich bei der linken Filterkammer die Ventile 18a vom Flüssigkeitseinlaß 13 und 18d vom Flüssigkeitsauslaß 16, so daß über die Dauer der Reinigung der rechten Filterkammer die Flüssigkeit über die linke Filterkammer filtriert wird. Nach der Reinigungsphase werden die Ventile 18a und 18d der linken Filterkammer wieder geschlossen, während die rechte Filterkammer wieder zur Filtration geöffnet wird.

## Patentansprüche

1. Begasungs/Flotations-Reaktor, insbesondere zur Aufbereitung von organische Materialien enthaltenden Flüssigkeiten, mit mindestens einem Zuleitungsrohr (1), das in einen Einleitungsraum (3) mündet, an den sich ein Steigrohr (7) anschließt, über welches ein Schaumrohr (9) übergreift, an dessen oberes Ende sich eine Schaumauf fangvorrichtung (10) anschließt und dessen unteres Ende in den unteren Bereich eines Mantelrohres (12) einmündet, dessen oberes Ende mindestens einen Flüssigkeitsauslaß (27) aufweist
**dadurch gekennzeichnet**,
daß der Einleitungsraum (3) aus einem zylinderförmigen Unterteil (I), in das das Zuleitungsrohr (1) tangential einmündet, und einem dem Unterteil aufgesetzten, als Kegelstumpf ausgebildeten Aufsatz (II) besteht, wobei der Winkel (5) zwischen Kegelgrundfläche und Kegelmantel so gewählt ist, daß die in der Flüssigkeit enthaltenen Feststoffe entlang der Kegelwandung in der aufsteigenden Strömung zu einem Bereich (6) geführt werden, der die Spitze eines an die Stelle des Kegelstumpfes gedachten Kegels umfaßt.

2. Reaktor nach Anspruch 1,
**dadurch gekennzeichnet**,
daß der Winkel (5) zwischen Kegelgrundfläche und Kegelmantel in einem Bereich von 30° bis 60° liegt.

3. Reaktor nach Anspruch 1 oder 2,
**dadurch gekennzeichnet**,
daß das Zuleitungsrohr (1) in der mittleren Höhe des zylinderförmigen Unterteils (I) in den Einleitungsraum (3) einmündet.

4. Reaktor nach einem der Ansprüche 1 bis 3,
**dadurch gekennzeichnet**,
daß oberhalb der Spitze des gedachten Kegels im Steigrohr (7) eine Einrichtung (8) zur Umwandlung der rotierenden Strömung in eine im Steigrohr (7) linear aufsteigende Strömung angeordnet ist.

5. Reaktor nach einem der Ansprüche 1 bis 4,
**dadurch gekennzeichnet**,
daß ein weiteres Rohr (14) das Mantelrohr (12) derart umhüllt, daß ein als Filterkammer ausgestalteter Zwischenraum (15) ausgebildet wird, der mit Filtermaterial gefüllt und mit einem Flüssigkeitseinlaß (13) und einem Flüssigkeitsauslaß (16) ausgestattet ist.

6. Reaktor nach Anspruch 5,
**dadurch gekennzeichnet**,
daß der Flüssigkeitsauslaß (27) des Mantelrohres (12) der Flüssigkeitseinlaß (13) in die Filterkammer (15) ist.

7. Reaktor nach Anspruch 5 oder 6,
**dadurch gekennzeichnet**,
daß im oberen Bereich der Filterkammer (15) oberhalb des Filtermaterials mindestens ein Flüssigkeitsüberlauf (25) ausgebildet ist.

8. Reaktor nach Anspruch 7,
**dadurch gekennzeichnet**,
daß der obere Bereich der Filterkammer (15) oberhalb des Filtermaterials mit einem Sensor (19) zur Messung des Flüssigkeitsstandes unterhalb des Überlaufes (25) und der untere Bereich der Fllterkammer (15) mit einer Einrichtung zum Einleiten von Luft und/oder Wasser (23) ausgestattet ist.

9. Reaktor nach einem der Ansprüche 5 bis 8,
**dadurch gekennzeichnet**,
daß ein oder mehrere Wände die Filterkammer (15) in 2 oder mehrere Filterkammern unterteilt.

10. Reaktor nach Anspruch 9,
**dadurch gekennzeichnet**,
daß wenigstens ein Teil der Filterkammern mit Überlauf (25) gemäß Anspruch 7, Sensor (19) und Einrichtung zum Einleiten von Luft und/oder Wasser (23) gemäß Anspruch 8 ausgestattet ist.

11. Reaktor nach einem der Ansprüche 5 bis 10,
**dadurch gekennzeichnet**,
daß der obere Bereich der Filterkammer(n) (15) über ein Rückführungsrohr (17) dem Zuleitungsrohr (1) angeschlossen ist, wobei die Filterkammer(n) (15) maximal bis direkt unterhalb der Anschlußöffnung des Rückführungsrohres (17) mit Filtermaterial gefüllt ist.

## Claims

1. A gas entrainment/flotation reactor, particularly for the processing of liquids containing organic materials, having at least one feed pipe (1), which leads into an inlet space (3) which is adjoined by a riser tube (7) which is overlapped by a foam tube (9), the upper end of which is adjoined by a foam catchment device (10) and the lower end of which leads into the lower region of a shell tube (12), the upper end of which contains at least one liquid outlet (27),
characterised in that
the inlet space (3) consists of a cylindrical lower part (I) into which the feed pipe (1) leads tangentially, and of a cap (II) which is placed on the lower part and which is constructed as a truncated cone, wherein the angle (5) between the base of the cone and the envelope of the cone is selected so that the solids contained in the liquid are guided along the cone wall in the rising stream to a region (6) which comprises the vertex of an imaginary cone at the position of the truncated cone.

2. A reactor according to claim 1,
characterised in that
the angle (5) between the base of the cone and the envelope of the cone is within a range from 30° to 60°.

3. A reactor according to claim 1 or 2,
characterised in that
the feed pipe (1) leads into the inlet space (3) at the mid-height of the cylindrical lower part (I).

4. A reactor according to any one of claims 1 to 3,
characterised in that
a device (8) for converting the rotating flow into a flow which rises linearly in the riser tube (7) is disposed above the vertex of the imaginary cone in the riser tube (7).

5. A reactor according to any one of claims 1 to 4,
characterised in that
a further tube (14) surrounds the shell tube (12) in such a way that an intermediate space (15) is formed which is fashioned as a filter chamber, which is filled with filter material and is equipped with a liquid inlet (13) and a liquid outlet (16).

6. A reactor according to claim 5,
characterised in that
the liquid outlet (27) of the shell tube (12) is the liquid inlet (13) into the filter chamber (15).

7. A reactor according to claim 5 or 6,
characterised in that
at least one liquid overflow (25) is constructed in the upper region of the filter chamber (15) above the filter material.

8. A reactor according to claim 7,
characterised in that
the upper region of the filter chamber (15) above the filter material is equipped with a sensor (19) for measuring the liquid level below the overflow (25) and the lower region of the filter chamber (15) is equipped with a device for introducing air and/or water (23).

9. A reactor according to any one of claims 5 to 8,
characterised in that
one or more walls divide the filter chamber (15) into 2 or more filter chambers.

10. A reactor according to claim 9,
characterised in that
at least a part of the filter chambers is equipped with an overflow (25) according to claim 7, with a sensor (19) and with a device for introducing air and/or water (23) according to claim 8.

11. A reactor according to any one of claims 5 to 10,
characterised in that
the upper region of the filter chamber(s) (15) is connected via a return pipe (17) to the feed pipe (1), wherein the filter chamber(s) (15) is filled with filter material up to a maximum level which is directly below the connection opening of the return pipe (17).

## Revendications

1. Réacteur d'absorption de gaz/de flottation, notamment pour le traitement de liquides contenant des matières organiques, comportant au moins un tube d'alimentation (1), qui débouche dans une chambre d'introduction (3), à laquelle se raccorde une colonne montante (7), par-dessus laquelle s'engage un tube (9) pour la mousse, à l'extrémité supérieure duquel se raccorde un dispositif (10) de collecte de mousse et dont l'extrémité inférieure débouche dans la partie inférieure d'un tube enveloppe (12), dont l'extrémité supérieure possède au moins une sortie (27) pour le liquide,
caractérisé en ce que la chambre d'introduction (3) est constituée par une partie inférieure de forme cylindrique (I), dans laquelle débouche tangentiellement le tube d'alimentation (1), et par un chapeau supérieur (II) disposé sur la partie inférieure et agencé en forme de tronc de cône, l'angle (5) entre la surface de base du cône et l'enveloppe du cône étant choisi de telle sorte que les substances solides contenues dans le liquide sont guidées le long de la paroi du cône, dans l'écoulement montant, jusqu'à une zone (6), qui enveloppe la pointe d'un cône imaginé à la place du tronc de cône.

2. Réacteur selon la revendication 1, caractérisé en ce que l'angle (5) entre la surface de base du cône et l'enveloppe conique se situe dans une gamme de 30° à 60°.

3. Réacteur selon la revendication 1 ou 2, caractérisé en ce que le tube d'alimentation (1) débouche à une hauteur moyenne de la partie inférieure de forme cylindre (I) dans la chambre d'introduction (3).

4. Réacteur selon l'une des revendications 1 à 3, caractérisé en ce qu'au-dessus de la pointe du cône imaginaire est disposé, dans la colonne montante (3), un dispositif (8) pour convertir un écoulement rotatif en un écoulement montant dans la colonne montante (7).

5. Réacteur selon l'une des revendication 1 à 4, caractérisé en ce qu'un autre tube (14) enveloppe le tube enveloppe (12) en formant un espace intercalaire (15) agencé sous la forme d'une chambre de filtre, qui est remplie par un matériau filtrant et est équipée d'une admission (13) pour le liquide et d'une sortie (14) pour le liquide.

6. Réacteur selon la revendication 5, caractérisé en ce que la sortie (27) pour le liquide du tube enveloppe (12) constitue l'entrée (13) pour le liquide dans la chambre à filtre (15).

7. Réacteur selon la revendication 5 ou 6, caractérisé en ce qu'au moins un trop-plein (25) pour le liquide est formé dans la partie supérieure de la chambre à filtre (15) au-dessus du matériau filtrant.

8. Réacteur selon la revendication 7, caractérisé en ce que la partie supérieure de la chambre à filtre (15) est équipée, au-dessus du matériau du filtrant, d'un capteur (19) pour mesurer le niveau du liquide au-dessous du trop-plein (25), et que la partie inférieure de la chambre à filtre (15) est équipée d'un dispositif pour introduire de l'air et/ou de l'eau (23).

9. Réacteur selon l'une des revendications 5 à 8, caractérisé en ce que plusieurs parois subdivisent la chambre à filtre (15) en deux ou plusieurs chambres de filtre.

10. Réacteur selon la revendication 9, caractérisé en ce qu'au moins une partie des chambres de filtre est équipée d'un trop-plein (25) conformément à la revendication 7, d'un capteur (19) et d'un dispositif pour introduire de l'air et/ou de l'eau (23) conformément à la revendication 8.

11. Réacteur selon l'une des revendications 5 à 10, caractérisé en ce que la partie supérieure de la ou des chambres à filtres (15) est raccordée par l'intermédiaire d'un tube de renvoi (17) au tube d'alimentation (1), la ou les chambres de filtres (15) étant remplies par un matériau filtrant au maximum jusqu'à une zone située immédiatement au-dessous de l'ouverture de raccordement du tube de renvoi (17).
